# EUROPÄISCHE PATENTSCHRIFT

(11) **EP 4 430 303 B1**
(45) Veröffentlichungstag und Bekanntmachung des Hinweises auf die Patenterteilung: **18.03.2026**
(21) Anmeldenummer: 22840651.8
(22) Anmeldetag: 20.12.2022
(51) Int. Cl.: F03D 80/80, H02B 13/035

(54) **WINDKRAFTANLAGE UND VERSCHALTUNG VON WINDKRAFTANLAGEN**
WIND TURBINE SYSTEM AND INTERCONNECTION OF WIND TURBINE SYSTEMS
SYSTÈME D'ÉOLIENNE ET INTERCONNEXION DE SYSTÈMES D'ÉOLIENNE

(30) Priorität: 03.01.2022 DE 102022200005
(43) Veröffentlichungstag der Anmeldung: 18.09.2024
(73) Patentinhaber: Siemens Energy Global GmbH & Co. KG, 81739 München (DE)
(72) Erfinder: BEUTEL, Stefan, 10555 Berlin (DE); BÜTÜNER, Ismail Cem, 14197 Berlin (DE); KERN, Johannes, 13581 Berlin (DE); KLEINSCHMIDT, Andreas, 16515 Oranienburg (DE); NIJHUIS, Alexander, 91054 Buckenhof (DE); SINGER, Andre, 16348 Wandlitz OT Schönwalde (DE); STEUER, Matthias, 91083 Baiersdorf (DE)
(86) Internationale Anmeldenummer: PCT/EP2022/086842
(87) Internationale Veröffentlichungsnummer: WO 2023/126243

(56) Entgegenhaltungen:
- US-A1- 2012 146 423
- GENERAL ELECTRIC: "GE Grid Solutions F35-72.5kV GIS Gas-Insulated Substations For Wind Turbines A compact HV substation fitted in the windturbine", 31 December 2017 (2017-12-31), XP093037986, Retrieved from the Internet <URL:https://www.gegridsolutions.com/products/brochures/grid-gis-l3-f35_72.5kv_wind_2017_05_en.pdf> [retrieved on 20230406]
- SCHACHNER JOSEF: "POWER CONNECTIONS FOR OFFSHORE WIND FARMS Diploma Thesis From", 31 January 2004 (2004-01-31), XP093037572, Retrieved from the Internet <URL:https://ocw.tudelft.nl/wp-content/uploads/E_infra_master_thesis.pdf> [retrieved on 20230405]
- EDVARD CSANYI: "Gas-Insulated Switchgear Type 8DN8 | CsanyiGroup", 24 November 2009 (2009-11-24), XP093038467, Retrieved from the Internet <URL:http://www.csanyigroup.com/gas-insulated-switchgear-type-8dn8> [retrieved on 20230412]

## Beschreibung

Die Erfindung betrifft eine Windkraftanlage und eine Verschaltung mehrerer Windkraftanlagen.

Eine Windkraftanlage, die auch als Windenergieanlage bezeichnet wird, weist in der Regel eine Elektroenergieübertragungsanlage auf, über die ein Generator der Windkraftanlage mit einem Stromnetz verbunden ist. Eine derartige Elektroenergieübertragungsanlage weist in der Regel einen Leistungsschalter auf, mit dem ein den Generator der Windkraftanlage aufweisender Strompfad erforderlichenfalls schnell unterbrochen werden kann. Wenn mehrere Windkraftanlagen miteinander verschaltet werden, kann es erforderlich sein, dass eine Windkraftanlage mehrere Leistungsschalter aufweist, beispielsweise um nicht nur einen den Generator der Windkraftanlage aufweisenden Strompfad, sondern auch eine Verschaltung der Windkraftanlagen untereinander erforderlichenfalls unterbrechen zu können. Das Dokument "GE Grid Solutions F35-72.5kV GIS Gas-Insulated Substations For Wind Turbines A compact HV substation fitted in the windturbine", 31. Dezember 2017 beschreibt eine gasisolierte Schaltstation für Windturbinen. Diese Schaltstation ist in Ausführungen für ein strahlenförmiges Netz sowie ein ringförmiges Netz adaptiert. Der Diplomarbeit "Power connections for offshore wind farms" von Josef Schachner, ist unter der Überschrift 3.4.2.6 eine Schaltanlage entnehmbar. Schematisiert ist dort die Anordnung mehrerer Schalter einer Sammelschiene eines Transformators sowie eines Generators gezeigt. Der US Patentanmeldung US 2012/0146423 A1 ist ein Verfahren entnehmbar, wie man eine Windturbine einer Windfarm im Inselbetrieb in Betrieb nehmen kann. Dem Artikel "Gas-Insulated Switchgear Type 8DN8" ist der Aufbau eines Schaltfeldes einer dreiphasig gekapselten Schaltanlage entnehmbar.

Der Erfindung liegt die Aufgabe zugrunde, eine Windkraftanlage mit mehreren Leistungsschaltern und eine Verschaltung mehrerer solcher Windkraftanlagen anzugeben.

Die Aufgabe wird erfindungsgemäß durch eine Windkraftanlage mit den Merkmalen des Anspruchs 1 und durch eine Verschaltung solcher Windkraftanlagen mit den Merkmalen des Anspruchs 12 gelöst.

Vorteilhafte Ausgestaltungen der Erfindung sind Gegenstand der Unteransprüche.

Eine erfindungsgemäße Windkraftanlage umfasst einen Generator, einen Turm und eine in dem Turm angeordnete Elektroenergieübertragungsanlage mit einer Sammelschiene und drei nebeneinander angeordneten Elektroenergieübertragungsmodulen. Jedes Elektroenergieübertragungsmodul weist einen die Sammelschiene mit einem Kabelendverschluss des Elektroenergieübertragungsmoduls verbindenden Strompfad auf. Wenigstens zwei Elektroenergieübertragungsmodule weisen jeweils einen Leistungsschalter auf, mit dem der Strompfad des Elektroenergieübertragungsmoduls unterbrechbar ist. Der Kabelendverschluss eines der einen Leistungsschalter aufweisenden Elektroenergieübertragungsmodule ist mit dem Generator verbunden.

Die Erfindung realisiert eine Windkraftanlage mit wenigstens zwei Leistungsschaltern durch drei Elektroenergieübertragungsmodule, von denen wenigstens zwei jeweils einen Leistungsschalter aufweisen. Der Strompfad eines einen Leistungsschalter aufweisenden ersten Elektroenergieübertragungsmoduls ist mit dem Generator der Windkraftanlage verbunden. Dadurch kann erforderlichenfalls ein mit dem Generator verbundener Strompfad durch den Leistungsschalter des ersten Elektroenergieübertragungsmoduls unterbrochen werden.

Die anderen beiden Elektroenergieübertragungsmodule können beispielsweise genutzt werden, um mehrere Windkraftanlagen miteinander zu verschalten. Beispielsweise wird der Strompfad eines zweiten Elektroenergieübertragungsmoduls einer ersten Windkraftanlage mit dem Strompfad eines Elektroenergieübertragungsmoduls einer zweiten Windkraftanlage verbunden und der Strompfad des dritten Elektroenergieübertragungsmoduls der ersten Windkraftanlage wird mit dem Strompfad eines Elektroenergieübertragungsmoduls einer dritten Windkraftanlage verbunden. Da die Elektroenergieübertragungsmodule der ersten Windkraftanlage durch die Sammelschiene miteinander verbunden sind, bleibt die Verbindung der drei Windkraftanlagen auch dann bestehen, wenn der Strompfad des ersten Elektroenergieübertragungsmoduls der ersten Windkraftanlage durch den Leistungsschalter des ersten Elektroenergieübertragungsmoduls unterbrochen wird. Dadurch, dass das zweite oder das dritte Elektroenergieübertragungsmodul einen Leistungsschalter aufweisen, kann durch diesen Leistungsschalter die Verbindung der drei Windkraftanlagen erforderlichenfalls unterbrochen werden.

Bei einer Ausgestaltung der Erfindung weist jedes Elektroenergieübertragungsmodul einen ersten Gehäuseteil auf, in dem ein Abschnitt der Sammelschiene verläuft, wobei die ersten Gehäuseteile benachbarter Elektroenergieübertragungsmodule miteinander verbunden sind. Mit anderen Worten verläuft die Sammelschiene in den miteinander verbundenen ersten Gehäuseteilen der Elektroenergieübertragungsmodule. Dadurch kann insbesondere eine gasdichte Kapselung der Sammelschiene erreicht werden.

Bei einer weiteren Ausgestaltung der Erfindung weist jedes Elektroenergieübertragungsmodul einen unterhalb seines ersten Gehäuseteils angeordneten Kabelanschlusskasten auf, in dem der Kabelendverschluss des Elektroenergieübertragungsmoduls angeordnet ist. Dadurch wird eine platzsparende Anordnung der Kabelanschlusskästen unterhalb der ersten Gehäuseteile realisiert. Dies ist vorteilhaft, weil der Turm einer Windkraftanlage einen relativ kleinen Durchmesser von nur wenigen Metern aufweist und daher eine kleine Grundfläche für die Anordnung der drei Elektroenergieübertragungsmodule zur Verfügung steht.

Bei einer weiteren Ausgestaltung der Erfindung ist in dem Kabelanschlusskasten desjenigen Elektroenergieübertragungsmoduls, dessen Kabelendverschluss mit dem Generator verbunden ist, eine Stromwandlereinheit angeordnet, die eingerichtet ist, eine Stromstärke eines in dem Strompfad des Elektroenergieübertragungsmoduls fließenden elektrischen Stroms zu erfassen und den Leistungsschalter des Elektroenergieübertragungsmoduls zum Unterbrechen des Strompfads zu aktivieren, wenn die Stromstärke einen vorgebbaren Schwellenwert überschreitet. Die Stromwandlereinheit ermöglicht eine Überwachung des in dem mit dem Generator verbundenen Strompfads und führt erforderlichenfalls zu einer Unterbrechung dieses Strompfads durch den Leistungsschalter.

Bei einer weiteren Ausgestaltung der Erfindung weist jedes Elektroenergieübertragungsmodul einen zweiten Gehäuseteil auf, der versetzt zu dem ersten Gehäuseteil und dem Kabelanschlusskasten angeordnet ist und in dem der Strompfad des Elektroenergieübertragungsmoduls zwischen dem ersten Gehäuseteil und dem Kabelanschlusskasten verläuft. Auch diese Ausgestaltung der Erfindung zielt auf eine platzsparende Ausführung der Elektroenergieübertragungsanlage.

Bei einer weiteren Ausgestaltung der Erfindung sind der erste Gehäuseteil und der zweite Gehäuseteil jedes Elektroenergieübertragungsmoduls gasdicht ausgeführt. Dies ermöglicht vorteilhaft eine gasisolierte Ausführung der Elektroenergieübertragungsanlage.

Bei einer weiteren Ausgestaltung der Erfindung ist der Leistungsschalter jedes einen Leistungsschalter aufweisenden Elektroenergieübertragungsmoduls in dem zweiten Gehäuseteil des Elektroenergieübertragungsmoduls angeordnet. Dies ermöglicht insbesondere eine gasisolierte Ausführung der Leistungsschalter.

Bei einer weiteren Ausgestaltung der Erfindung weist jedes einen Leistungsschalter aufweisendes Elektroenergieübertragungsmodul einen in seinem ersten Gehäuseteil angeordneten kombinierten Trenn- und Erdungsschalter auf, mit dem der Strompfad des Elektroenergieübertragungsmoduls unterbrechbar ist und ein mit dem Leistungsschalter verbundener Abschnitt des Strompfads erdbar ist. Dies ermöglicht insbesondere, einen Anschluss des jeweiligen Leistungsschalters zu erden, bevor der Leistungsschalter nach einem Öffnen wieder geschlossen wird.

Bei einer weiteren Ausgestaltung der Erfindung weist jedes einen Leistungsschalter aufweisendes Elektroenergieübertragungsmodul einen Leistungsschalterantrieb für den Leistungsschalter auf, der oberhalb des ersten Gehäuseteils des Elektroenergieübertragungsmoduls angeordnet ist. Auch diese Ausgestaltung der Erfindung zielt auf eine platzsparende Ausführung der Elektroenergieübertragungsanlage.

Bei einer weiteren Ausgestaltung der Erfindung weist eines der Elektroenergieübertragungsmodule keinen Leistungsschalter auf. Auch das keinen Leistungsschalter aufweisende Elektroenergieübertragungsmodul kann einen in seinem ersten Gehäuseteil angeordneten kombinierten Trenn- und Erdungsschalter aufweisen, mit dem der Strompfad des Elektroenergieübertragungsmoduls unterbrechbar ist und ein Abschnitt des Strompfads erdbar ist. Die Ausführung der Elektroenergieübertragungsanlage mit einem Elektroenergieübertragungsmodul, das keinen Leistungsschalter aufweist, ist kostengünstiger als die Ausführung mit drei jeweils einen Leistungsschalter aufweisenden Elektroenergieübertragungsmodulen. Diese Ausführung ist daher bevorzugt, wenn ein dritter Leistungsschalter nicht benötigt wird. Andernfalls weist jedes Elektroenergieübertragungsmodul einen Leistungsschalter auf, mit dem der Strompfad des Elektroenergieübertragungsmoduls unterbrechbar ist.

Bei einer weiteren Ausgestaltung der Erfindung weist die Windkraftanlage einen neben dem ersten Gehäuseteil eines Elektroenergieübertragungsmoduls angeordneten Schaltschrank auf. Auch diese Ausgestaltung der Erfindung zielt auf eine platzsparende Ausführung der Elektroenergieübertragungsanlage**.**

Bei einer weiteren Ausgestaltung der Erfindung sind alle Bedienelemente und Anzeigeelemente der Elektroenergieübertragungsanlage auf derselben Seite der Elektroenergieübertragungsanlage angeordnet. Dies ermöglicht eine einfache Bedienung und Kontrolle der Elektroenergieübertragungsanlage.

Bei einer erfindungsgemäßen Verschaltung mehrerer erfindungsgemäßer Windkraftanlagen sind Kabelendverschlüsse der Elektroenergieübertragungsmodule der Windkraftanlagen durch elektrische Verbindungen verbunden, wobei
- jeweils wenigstens ein Kabelendverschluss zweier miteinander verbundener Kabelendverschlüsse der Kabelendverschluss eines einen Leistungsschalter aufweisenden Elektroenergieübertragungsmoduls ist,
- jede Windkraftanlage mit genau einer anderen Windkraftanlage oder genau zwei anderen Windkraftanlagen verschaltet ist,
- wenigstens eine Windkraftanlage mit genau einer anderen Windkraftanlage verschaltet ist,
- wenigstens eine Windkraftanlage mit genau zwei anderen Windkraftanlagen verschaltet ist, und
- jeder Kabelendverschluss eines Elektroenergieübertragungsmoduls jeder Windkraftanlage, die mit zwei anderen Windkraftanlagen verschaltet ist, entweder mit dem Generator der Windkraftanlage oder mit einem Kabelendverschluss eines Elektroenergieübertragungsmoduls einer der beiden anderen Windkraftanlagen verbunden ist.

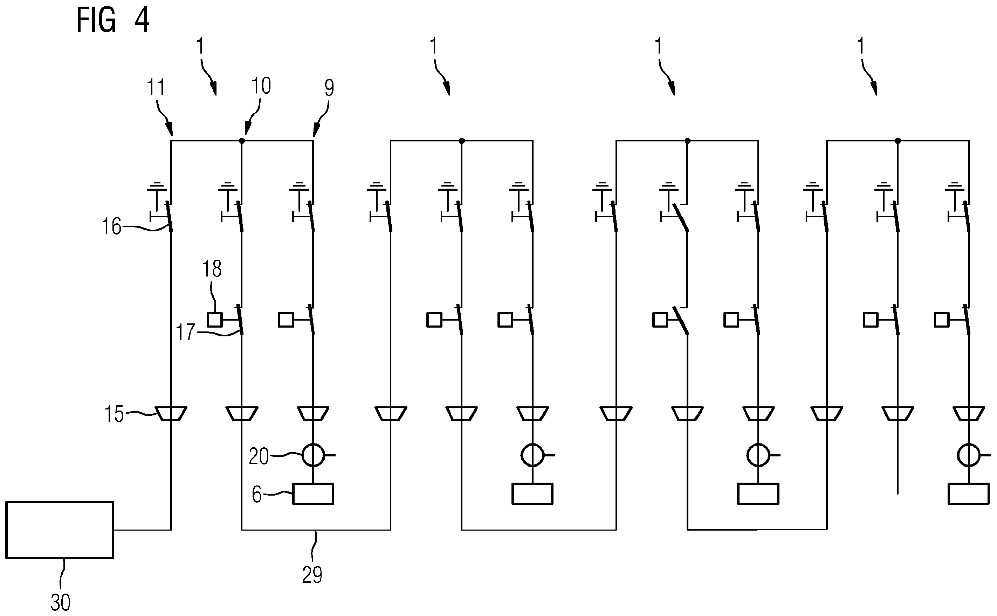

Eine derartige Verschaltung erfindungsgemäßer Windkraftanlagen ermöglicht eine Unterbrechung der Verbindung zweier Windkraftanlagen durch den Leistungsschalter einer dieser Windkraftanlagen, beispielsweise im Falle eines Defekts, der eine solche Unterbrechung erfordert. Gleichzeitig kann aber die Verbindung und der Betrieb anderer Windkraftanlagen aufrechterhalten werden, die beispielsweise elektrisch zwischen den beiden voneinander getrennten Windkraftanlagen und einer Energiesammelstation angeordnet sind, mit der die Windkraftanlagen verbunden sind (siehe dazu Figur 4 unten).

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine Windkraftanlage,
- FIG 2: eine perspektivische Darstellung einer Elektroenergieübertragungsanlage eines Ausführungsbeispiels einer Windkraftanlage,
- FIG 3: ein Blockdiagramm einer Elektroenergieübertragungsanlage eines Ausführungsbeispiels einer Windkraftanlage,
- FIG 4: eine Verschaltung mehrerer Windkraftanlagen.

Einander entsprechende Teile sind in den Figuren mit denselben Bezugszeichen versehen.

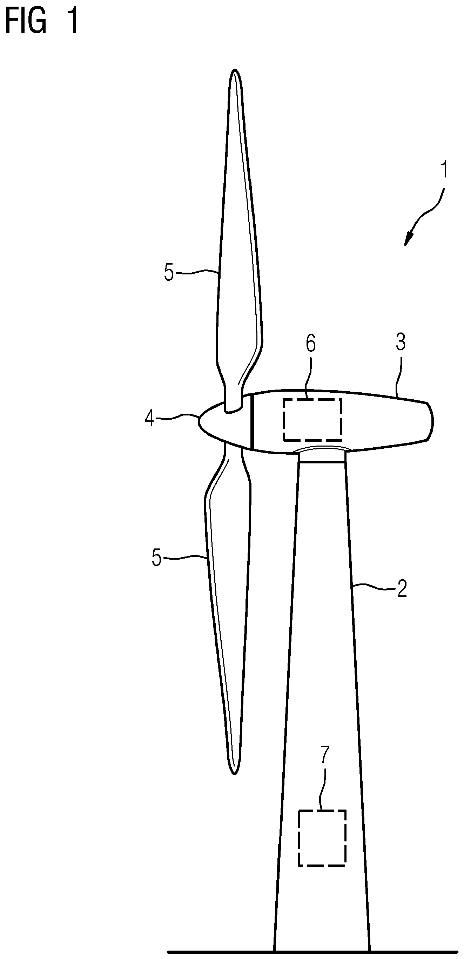

Figur 1 (FIG 1) zeigt eine Windkraftanlage 1. Die Windkraftanlage 1 umfasst einen Turm 2, eine Maschinengondel 3, eine Rotornabe 4 und Rotorblätter 5. Die Maschinengondel 3 ist auf dem Turm 2 angeordnet. Die Rotornabe 4 ist drehbar an der Maschinengondel 3 angeordnet. Die Rotorblätter 5 sind an der Rotornabe 4 angeordnet.

In der Maschinengondel 3 ist ein Generator 6 der Windkraftanlage 1 angeordnet. In dem Turm 2 ist eine Elektroenergieübertragungsanlage 7 angeordnet.

Die Windkraftanlage 1 ist beispielsweise eine Anlage eines Offshore-Windparks.

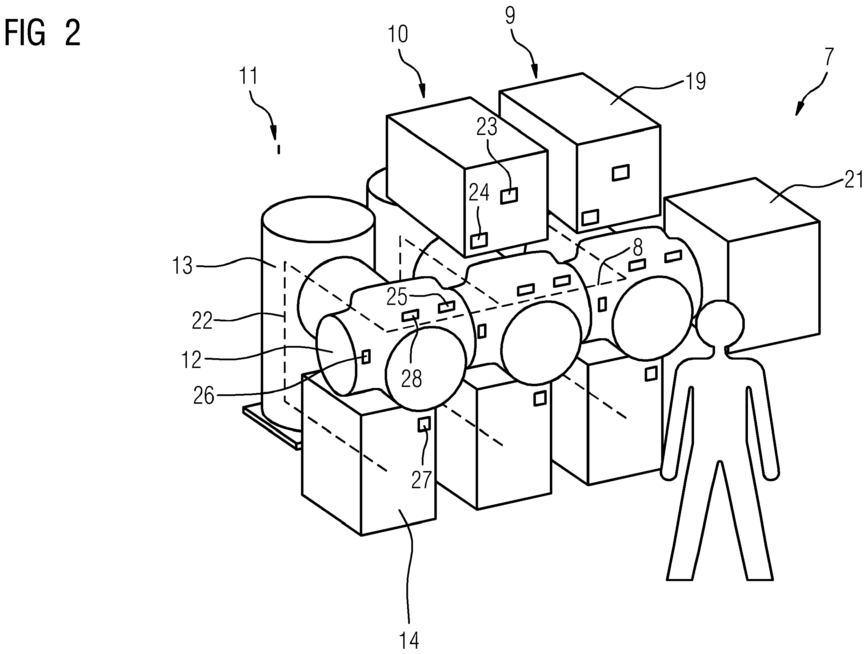

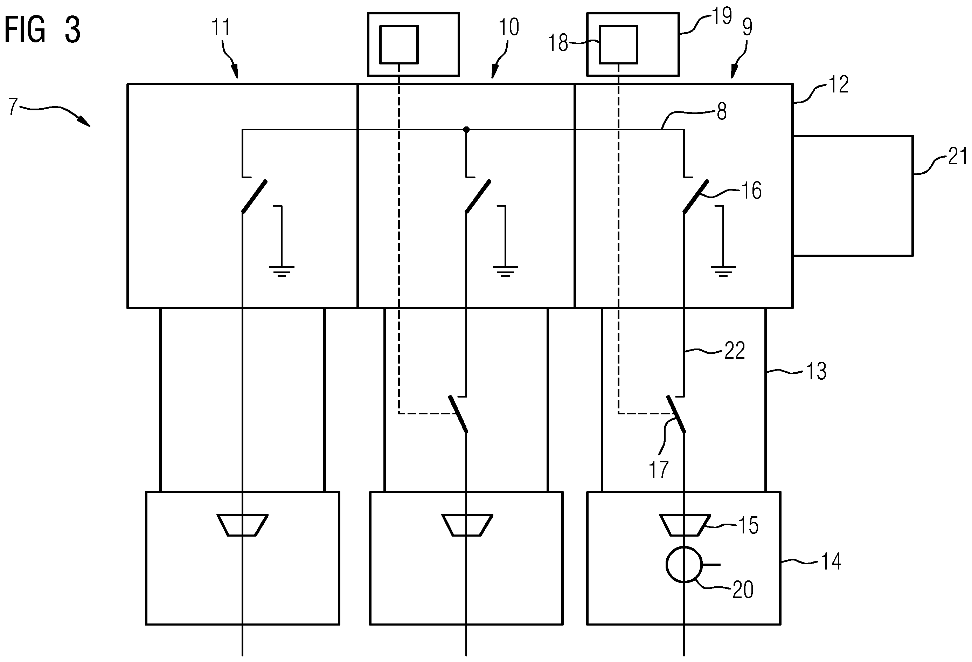

Figur 2 (FIG 2) und Figur 3 (FIG 3) zeigen eine Elektroenergieübertragungsanlage 7 einer Windkraftanlage 1 gemäß einem Ausführungsbeispiel der Erfindung. Dabei zeigt Figur 2 eine perspektivische Darstellung der Elektroenergieübertragungsanlage 7 und Figur 3 zeigt ein Blockdiagramm der Elektroenergieübertragungsanlage 7 mit einem Schaltplan der Elektroenergieübertragungsanlage 7. Der Schaltplan ist vereinfachend als Einliniendiagramm (engl. single-line diagram) dargestellt, bei dem dreiphasige Strompfade durch eine Linie dargestellt werden.

Die Elektroenergieübertragungsanlage 7 weist eine Sammelschiene 8 und drei nebeneinander angeordnete Elektroenergieübertragungsmodule 9, 10, 11 auf. Jedes Elektroenergieübertragungsmodul 9, 10, 11 weist einen ersten Gehäuseteil 12, einen zweiten Gehäuseteil 13 und einen Kabelanschlusskasten 14 auf.

Die ersten Gehäuseteile 12 benachbarter Elektroenergieübertragungsmodule 9, 10, 11 sind miteinander verbunden. In jedem ersten Gehäuseteil 12 verläuft ein Abschnitt der Sammelschiene 8, das heißt die Sammelschiene 8 verläuft in den miteinander verbundenen ersten Gehäuseteilen 12.

In dem Kabelanschlusskasten 14 jedes Elektroenergieübertragungsmoduls 9, 10, 11 ist ein Kabelendverschluss 15 des jeweiligen Elektroenergieübertragungsmoduls 9, 10, 11 angeordnet. Über seinen Kabelendverschluss 15 ist ein Elektroenergieübertragungsmodul 9, 10, 11 elektrisch kontaktierbar beziehungsweise mit anderen Einrichtungen elektrisch verbindbar. Der Kabelanschlusskasten 14 eines Elektroenergieübertragungsmoduls 9, 10, 11 ist unterhalb des ersten Gehäuseteils 12 des Elektroenergieübertragungsmoduls 9, 10, 11 angeordnet.

Der zweite Gehäuseteil 13 eines Elektroenergieübertragungsmoduls 9, 10, 11 ist im Wesentlichen kreiszylindrisch ausgebildet und versetzt zu dem ersten Gehäuseteil 12 und dem Kabelanschlusskasten 14 des Elektroenergieübertragungsmoduls 9, 10, 11 angeordnet.

Die ersten Gehäuseteile 12 und die zweiten Gehäuseteile 13 sind beispielsweise gasdicht ausgeführt, um eine gasisolierte Elektroenergieübertragungsanlage 7 zu realisieren.

Jedes Elektroenergieübertragungsmodul 9, 10, 11 weist einen Strompfad 22 auf, der die Sammelschiene 8 mit dem Kabelendverschluss 15 des Elektroenergieübertragungsmoduls 9, 10, 11 verbindet. Der Strompfad 22 verläuft von der Sammelschiene 8 in dem ersten Gehäuseteil 12 des Elektroenergieübertragungsmoduls 9, 10, 11 zu dem zweiten Gehäuseteil 13 des Elektroenergieübertragungsmoduls 9, 10, 11 und durch den zweiten Gehäuseteil 13 zu dem Kabelanschlusskasten 14 des Elektroenergieübertragungsmoduls 9, 10, 11. In dem Kabelanschlusskasten 14 verläuft der Strompfad 22 zu dem Kabelendverschluss 15 des Elektroenergieübertragungsmoduls 9, 10, 11. Der Strompfad 22 jedes Elektroenergieübertragungsmoduls 9, 10, 11 verläuft somit C-förmig (dem Buchstaben C entsprechend).

Der Kabelendverschluss 15 eines ersten Elektroenergieübertragungsmoduls 9 ist mit dem Generator 6 verbunden. Mit anderen Worten verläuft von dem Kabelendverschluss 15 des ersten Elektroenergieübertragungsmoduls 9 für jede Phase des Generators 6 eine Stromleitung durch den Turm 2 zu dem Generator 6.

Die Kabelendverschlüsse 15 eines zweiten Elektroenergieübertragungsmoduls 10 und des dritten Elektroenergieübertragungsmoduls 11 sind jeweils mit einem Stromnetz verbindbar oder verbunden, in dem sich die Windkraftanlage 1 befindet. Beispielsweise ist das Stromnetz das Stromnetz eines Windparks, in dem mehrere Windkraftanlagen 1 elektrisch miteinander verschaltet sind, siehe dazu beispielhaft Figur 4.

Jedes Elektroenergieübertragungsmodul 9, 10, 11 weist einen in seinem ersten Gehäuseteil 12 angeordneten kombinierten Trenn- und Erdungsschalter 16 auf, mit dem der Strompfad 22 des Elektroenergieübertragungsmoduls 9, 10, 11 unterbrechbar ist.

Das erste Elektroenergieübertragungsmodul 9 und das zweite Elektroenergieübertragungsmodul 10 weisen jeweils einen Leistungsschalter 17 auf, der in dem zweiten Gehäuseteil 13 des jeweiligen Elektroenergieübertragungsmoduls 9, 10 angeordnet ist. Mit dem Leistungsschalter 17 ist der Strompfad 22 des jeweiligen Elektroenergieübertragungsmoduls 9, 10 unterbrechbar.

Das erste Elektroenergieübertragungsmodul 9 und das zweite Elektroenergieübertragungsmodul 10 weisen ferner jeweils einen Leistungsschalterantrieb 18 für den Leistungsschalter 17 des jeweiligen Elektroenergieübertragungsmoduls 9, 10, 11 auf. Der Leistungsschalterantrieb 18 ist in einem Antriebsgehäuse 19 oberhalb des ersten Gehäuseteils 12 und des zweiten Gehäuseteils 13 des jeweiligen Elektroenergieübertragungsmoduls 9, 10, 11 angeordnet.

In dem Kabelanschlusskasten 14 des ersten Elektroenergieübertragungsmoduls 9 ist eine Stromwandlereinheit 20 angeordnet. Die Stromwandlereinheit 20 ist eingerichtet, eine Stromstärke eines in dem Strompfad 22 des ersten Elektroenergieübertragungsmoduls 9 fließenden Stroms zu erfassen und den Leistungsschalter 9 des ersten Elektroenergieübertragungsmoduls 9 zum Unterbrechen des Strompfads 22 zu aktivieren, wenn die Stromstärke einen vorgebbaren Schwellenwert überschreitet.

Die Elektroenergieübertragungsanlage 7 weist ferner einen Schaltschrank 21 auf, der neben dem ersten Gehäuseteil 12 des ersten Elektroenergieübertragungsmoduls 9, 10, 11 angeordnet ist.

Sämtliche Bedienelemente und Anzeigeelemente der Elektroenergieübertragungsanlage 7 sind auf derselben Seite der Elektroenergieübertragungsanlage 7 angeordnet. Figur 2 zeigt beispielhaft Schaltstellungsanzeigen 23 zum Anzeigen jeweils einer Schaltstellung eines Leistungsschalters 17, manuell bedienbare Notausschalter 24 zum Notausschalten jeweils eines Leistungsschalters 17, Schaltstellungsanzeigen 25 zum Anzeigen jeweils einer Schaltstellung eines Trenn- und Erdungsschalters 16, Gasdichteanzeigen 26 zum Anzeigen einer Gasdichte in den Gehäuseteilen 12, 13 jeweils eines Elektroenergieübertragungsmoduls 9, 10, 11, Spannungsanzeigen 27 zum Anzeigen jeweils einer an einem Strompfad 22 anliegenden Spannung und manuell bedienbare Antriebe 28 für jeweils einen Trenn- und Erdungsschalter 16.

Das dritte Elektroenergieübertragungsmodul 11 weist bei dem in den Figuren 2 und 3 dargestellten Ausführungsbeispiel keinen Leistungsschalter 17 auf, sondern dient nur dem Durchleiten von Strom. Andere Ausführungsbeispiele können jedoch vorsehen, dass auch das dritte Elektroenergieübertragungsmodul 11 einen Leistungsschalter 17 aufweist und wie das zweite Elektroenergieübertragungsmodul 10 ausgeführt ist.

Figur 4 (FIG 4) zeigt eine Verschaltung mehrerer Windkraftanlagen 1 durch elektrische Verbindungen 29 der Kabelendverschlüsse 15 der Elektroenergieübertragungsmodule 9, 10, 11 der Windkraftanlagen 1. Dargestellt ist beispielhaft eine Verschaltung von vier Windkraftanlagen 1. Die Windkraftanlagen 1 sind jeweils abstrahiert durch einen Schaltplan dargestellt. Jede Windkraftanlage 1 umfasst ein erstes Elektroenergieübertragungsmodul 9, das einen Leistungsschalter 17 aufweist und dessen Kabelendverschluss 15 mit dem Generator 6 der Windkraftanlage 1 verbunden ist, ein zweites Elektroenergieübertragungsmodul 10, das ebenfalls einen Leistungsschalter 17 aufweist, und ein drittes Elektroenergieübertragungsmodul 11, das keinen Leistungsschalter 17 aufweist.

Der Kabelendverschluss 15 des dritten Elektroenergieübertragungsmoduls 11 einer in Figur 4 links dargestellten ersten Windkraftanlage 1 ist mit einer Energiesammelstation 30 verbunden. Der Kabelendverschluss 15 des zweiten Elektroenergieübertragungsmoduls 10 der ersten Windkraftanlage 1 ist mit dem Kabelendverschluss 15 des dritten Elektroenergieübertragungsmoduls 11 einer zweiten Windkraftanlage 1 verbunden, die in Figur 4 rechts neben der ersten Windkraftanlage 1 dargestellt ist.

Der Kabelendverschluss 15 des zweiten Elektroenergieübertragungsmoduls 10 der zweiten Windkraftanlage 1 ist mit dem Kabelendverschluss 15 des dritten Elektroenergieübertragungsmoduls 11 einer dritten Windkraftanlage 1 verbunden, die in Figur 4 rechts neben der zweiten Windkraftanlage 1 dargestellt ist.

Der Kabelendverschluss 15 des zweiten Elektroenergieübertragungsmoduls 10 der dritten Windkraftanlage 1 ist mit dem Kabelendverschluss 15 des dritten Elektroenergieübertragungsmoduls 11 einer in Figur 4 rechts dargestellten vierten Windkraftanlage 1 verbunden.

Ferner ist beispielhaft die Situation gezeigt, dass aufgrund eines Defekts der Leistungsschalter 17 und der Trenn- und Erdungsschalter 16 des zweiten Elektroenergieübertragungsmoduls 10 der dritten Windkraftanlage 1 geöffnet sind. Dadurch ist die Verschaltung der dritten Windkraftanlage 1 mit der vierten Windkraftanlage 1 unterbrochen. Die erste Windkraftanlage 1 und die zweite Windkraftanlage 1 können dennoch weiterbetrieben werden. Dies illustriert die Nützlichkeit der Ausführung der Windkraftanlagen 1 mit jeweils (mindestens) zwei Leistungsschaltern 17 zum Verschalten mehrerer Windkraftanlagen 1.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Windkraftanlage (1), umfassend
- einen Generator (6),
- einen Turm (2)
- und eine in dem Turm (2) angeordnete Elektroenergieübertragungsanlage (7) mit einer Sammelschiene (8) und drei nebeneinander angeordneten Elektroenergieübertragungsmodulen (9, 10, 11), wobei
- jedes Elektroenergieübertragungsmodul (9, 10, 11) einen die Sammelschiene (8) mit einem Kabelendverschluss (15) des Elektroenergieübertragungsmoduls (9, 10, 11) verbindenden Strompfad (22) aufweist,
- wenigstens zwei Elektroenergieübertragungsmodule (9, 10, 11) jeweils einen Leistungsschalter (17) aufweisen, mit dem der Strompfad (22) des Elektroenergieübertragungsmoduls (9, 10, 11) unterbrechbar ist, und
- der Kabelendverschluss (15) eines der einen Leistungsschalter (17) aufweisenden Elektroenergieübertragungsmodule (9, 10, 11) mit dem Generator (6) verbunden ist, wobei jedes Elektroenergieübertragungsmodul (9, 10, 11) einen ersten Gehäuseteil (12) aufweist, in dem ein Abschnitt der Sammelschiene (8) verläuft, **dadurch gekennzeichnet, dass** die ersten Gehäuseteile (12) benachbarter Elektroenergieübertragungsmodule (9, 10, 11) miteinander verbunden sind, wobei jedes Elektroenergieübertragungsmodul (9, 10, 11) einen unterhalb seines ersten Gehäuseteils (12) angeordneten Kabelanschlusskasten (14) aufweist, in dem der Kabelendverschluss (15) des Elektroenergieübertragungsmoduls (9, 10, 11) angeordnet ist und
wobei jedes einen Leistungsschalter (17) aufweisendes Elektroenergieübertragungsmodul (9, 10, 11) einen Leistungsschalterantrieb (18) für den Leistungsschalter (17) aufweist, der oberhalb des ersten Gehäuseteils (12) des Elektroenergieübertragungsmoduls (9, 10, 11) angeordnet ist.

2. Windkraftanlage (1) nach Anspruch 1, wobei in dem Kabelanschlusskasten (14) desjenigen Elektroenergieübertragungsmoduls (9, 10, 11), dessen Kabelendverschluss (15) mit dem Generator (6) verbunden ist, eine Stromwandlereinheit (20) angeordnet ist, die eingerichtet ist, eine Stromstärke eines in dem Strompfad (22) des Elektroenergieübertragungsmoduls (9, 10, 11) fließenden elektrischen Stroms zu erfassen und den Leistungsschalter (17) des Elektroenergieübertragungsmoduls (9, 10, 11) zum Unterbrechen des Strompfads (22) zu aktivieren, wenn die Stromstärke einen vorgebbaren Schwellenwert überschreitet.

3. Windkraftanlage (1) nach einem der Ansprüche 1 oder 2, wobei jedes Elektroenergieübertragungsmodul (9, 10, 11) einen zweiten Gehäuseteil (13) aufweist, der versetzt zu dem ersten Gehäuseteil (12) und dem Kabelanschlusskasten (14) angeordnet ist und in dem der Strompfad (22) des Elektroenergieübertragungsmoduls (9, 10, 11) zwischen dem ersten Gehäuseteil (12) und dem Kabelanschlusskasten (14) verläuft.

4. Windkraftanlage (1) nach Anspruch 3, wobei der erste Gehäuseteil (12) und der zweite Gehäuseteil (13) jedes Elektroenergieübertragungsmoduls (9, 10, 11) gasdicht ausgeführt sind.

5. Windkraftanlage (1) nach Anspruch 3 oder 4, wobei der Leistungsschalter (17) jedes einen Leistungsschalter (17) aufweisenden Elektroenergieübertragungsmoduls (9, 10, 11) in dem zweiten Gehäuseteil (13) des Elektroenergieübertragungsmoduls (9, 10, 11) angeordnet ist.

6. Windkraftanlage (1) nach einem der Ansprüche 1 bis 5, wobei jedes einen Leistungsschalter (17) aufweisendes Elektroenergieübertragungsmodul (9, 10, 11) einen in seinem ersten Gehäuseteil (12) angeordneten kombinierten Trenn- und Erdungsschalter (16) aufweist, mit dem der Strompfad (22) des Elektroenergieübertragungsmoduls (9, 10, 11) unterbrechbar ist und ein mit dem Leistungsschalter (17) verbundener Abschnitt des Strompfads (22) erdbar ist.

7. Windkraftanlage (1) nach einem der vorhergehenden Ansprüche, wobei eines der Elektroenergieübertragungsmodule (9, 10, 11) keinen Leistungsschalter (17) aufweist.

8. Windkraftanlage (1) nach einem der Ansprüche 1 bis 7, wobei das keinen Leistungsschalter (17) aufweisende Elektroenergieübertragungsmodul (9, 10, 11) einen in seinem ersten Gehäuseteil (12) angeordneten kombinierten Trenn- und Erdungsschalter (16) aufweist, mit dem der Strompfad (22) des Elektroenergieübertragungsmoduls (9, 10, 11) unterbrechbar ist und ein Abschnitt des Strompfads (22) erdbar ist.

9. Windkraftanlage (1) nach einem der Ansprüche 1 bis 8, wobei jedes Elektroenergieübertragungsmodul (9, 10, 11) einen Leistungsschalter (17) aufweist, mit dem der Strompfad (22) des Elektroenergieübertragungsmoduls (9, 10, 11) unterbrechbar ist.

10. Windkraftanlage (1) nach einem der Ansprüche 1 bis 9 mit einem neben dem ersten Gehäuseteil (12) eines Elektroenergieübertragungsmoduls (9, 10, 11) angeordneten Schaltschrank (21).

11. Windkraftanlage (1) nach einem der vorhergehenden Ansprüche, wobei alle Bedienelemente (24, 28) und Anzeigeelemente (23, 25, 26, 27) der Elektroenergieübertragungsanlage (7) auf derselben Seite der Elektroenergieübertragungsanlage (7) angeordnet sind.

12. Verschaltung mehrerer jeweils gemäß einem der vorhergehenden Ansprüche ausgebildeter Windkraftanlagen (1) durch elektrische Verbindungen (29) von Kabelendverschlüssen (15) der Elektroenergieübertragungsmodule (9, 10, 11) der Windkraftanlagen (1), wobei
- jeweils wenigstens ein Kabelendverschluss (15) zweier miteinander verbundener Kabelendverschlüsse (15) der Kabelendverschluss (15) eines einen Leistungsschalter (17) aufweisenden Elektroenergieübertragungsmoduls (9, 10, 11) ist,
- jede Windkraftanlage (1) mit genau einer anderen Windkraftanlage (1) oder genau zwei anderen Windkraftanlagen (1) verschaltet ist,
- wenigstens eine Windkraftanlage (1) mit genau einer anderen Windkraftanlage (1) verschaltet ist,
- wenigstens eine Windkraftanlage (1) mit genau zwei anderen Windkraftanlagen (1) verschaltet ist, und
- jeder Kabelendverschluss (15) eines Elektroenergieübertragungsmoduls (9, 10, 11) jeder Windkraftanlage (1), die mit zwei anderen Windkraftanlagen (1) verschaltet ist, entweder mit dem Generator (6) der Windkraftanlage (1) oder mit einem Kabelendverschluss (15) eines Elektroenergieübertragungsmoduls (9, 10, 11) einer der beiden anderen Windkraftanlagen (1) verbunden ist.

## Claims

1. A wind turbine system (1) comprising
- a generator (6),
- a tower (2),
- and an electric energy transmission system (7) arranged in the tower (2) and having a busbar (8) and three electric energy transmission modules (9, 10, 11) arranged adjacent to one another, wherein
- each electric energy transmission module (9, 10, 11) has a current path (22) connecting the busbar (8) to a cable termination (15) of the electric energy transmission module (9, 10, 11),
- at least two electric energy transmission modules (9, 10, 11) each have a power switch (17) with which the current path (22) of the electric energy transmission module (9, 10, 11) can be interrupted, and
- the cable termination (15) of one of the electric energy transmission modules (9, 10, 11) having a power switch (17) is connected to the generator (6), wherein each electric energy transmission module (9, 10, 11) has a first housing part (12), in which a section of the busbar (8) extends, **characterized in that** the first housing parts (12) of adjacent electric energy transmission modules (9, 10, 11) are connected to one another, wherein each electric energy transmission module (9, 10, 11) has a cable terminal box (14) arranged below its first housing part (12), in which the cable termination (15) of the electric energy transmission module (9, 10, 11) is arranged, and
wherein each electric energy transmission module (9, 10, 11) having a power switch (17) has a power switch drive (18) for the power switch (17) arranged above the first housing part (12) of the electric energy transmission module (9, 10, 11).

2. The wind turbine system (1) according to claim 1, wherein a current transducer unit (20) is arranged in the cable terminal box (14) of that electric power transmission module (9, 10, 11), the cable termination (15) of which is connected to the generator (6), and configured to detect a current intensity of an electric current flowing in the current path (22) of the electric energy transmission module (9, 10, 11) and to activate the power switch (17) of the electric energy transmission module (9, 10, 11) to interrupt the current path (22) when the current intensity exceeds a predefinable threshold.

3. The wind turbine system (1) according to any one of claims 1 or 2, wherein each electric energy transmission module (9, 10, 11) has a second housing part (13) which is arranged offset to the first housing part (12) and the cable terminal box (14) and in which the current path (22) of the electric energy transmission module (9, 10, 11) extends between the first housing part (12) and the cable terminal box (14).

4. The wind turbine system (1) according to claim 3, wherein the first housing part (12) and the second housing part (13) of each electric energy transmission module (9, 10, 11) are gas-tight.

5. The wind turbine system (1) according to claim 3 or 4, wherein the power switch (17) of each electric energy transmission module (9, 10, 11) having a power switch (17) is arranged in the second housing part (13) of the electric energy transmission module (9, 10, 11).

6. The wind turbine system (1) according to any one of claims 1 to 5, wherein each electric energy transmission module (9, 10, 11) having a power switch (17) has a combined disconnect and grounding switch (16) arranged in its first housing part (12), with which the current path (22) of the electric energy transmission module (9, 10, 11) can be interrupted and a section of the current path (22) connected to the power switch (17) can be grounded.

7. The wind turbine system (1) according to any one of the preceding claims, wherein one of the electric energy transmission modules (9, 10, 11) has no power switch (17).

8. The wind turbine system (1) according to any one of claim 1 to 7, wherein the electric energy transmission module (9, 10, 11) having no power switch (17) has a combined disconnect and grounding switch (16) arranged in its first housing part (12), with which the current path (22) of the electric energy transmission module (9, 10, 11) can be interrupted and a section of the current path (22) can be grounded.

9. The wind turbine system (1) according to any one of claim 1 to 8, wherein each electric energy transmission module (9, 10, 11) has a power switch (17) with which the current path (22) of the electric energy transmission module (9, 10, 11) can be interrupted.

10. The wind turbine system (1) according to any one of claim 1 to 9 having a switch cabinet (21) arranged adjacent to the first housing part (12) of an electric energy transmission module (9, 10, 11).

11. The wind turbine system (1) according to any of the preceding claims, wherein all operating elements (24, 28) and display elements (23, 25, 26, 27) of the electric energy transmission system (7) are arranged on the same side of the electric energy transmission system (7).

12. An interconnection of a plurality of wind turbine systems (1), each formed according to any one of the preceding claims, by electric connections (29) of cable terminations (15) of the electric energy transmission modules (9, 10, 11) of the wind turbine systems (1), wherein
- at least one cable termination (15) of any two interconnected cable terminations (15) is the cable termination (15) of an electric energy transmission module (9, 10, 11) having a power switch (17),
- each wind turbine system (1) is interconnected to exactly one other wind turbine system (1) or exactly two other wind turbine systems (1),
- at least one wind turbine system (1) is interconnected to exactly one other wind turbine system (1),
- at least one wind turbine system (1) is interconnected to exactly two other wind turbine systems (1), and
- each cable termination (15) of an electric energy transmission module (9, 10, 11) of each wind turbine system (1) interconnected to two other wind turbine systems (1) is connected to either the generator (6) of the wind turbine system (1) or a cable termination (15) of an electric energy transmission module (9, 10, 11) of one of the two other wind turbine systems (1).

## Revendications

1. Éolienne (1), comprenant
- un générateur (6),
- une tour (2)
- et une installation de transmission d'énergie électrique (7) disposée dans la tour (2) comprenant un jeu de barres (8) et trois modules de transmission d'énergie électrique (9, 10, 11) agencés côte à côte, dans laquelle
- chaque module de transmission d'énergie électrique (9, 10, 11) présentant un chemin de courant (22) reliant le jeu de barres (8) à une terminaison de câble (15) du module de transmission d'énergie électrique (9, 10, 11) ;
- au moins deux modules de transmission d'énergie électrique (9, 10, 11) présentant chacun un disjoncteur (17) permettant d'interrompre le chemin de courant (22) du module de transmission d'énergie électrique (9, 10, 11), et
- la terminaison de câble (15) de l'un des modules de transmission d'énergie électrique (9, 10, 11) comportant un disjoncteur (17) étant connectée au générateur (6), chaque module de transmission d'énergie électrique (9, 10, 11) présentant une première partie de boîtier (12) dans laquelle s'étend une section du jeu de barres (8), **caractérisée en ce que** les premières parties de boîtier (12) de modules de transmission d'énergie électrique (9, 10, 11) adjacents sont connectées entre elles, chaque module de transmission d'énergie électrique (9, 10, 11) présentant une boîte de raccordement de câble (14) disposée en dessous de sa première partie de boîtier (12), dans laquelle est disposée la terminaison de câble (15) du module de transmission d'énergie électrique (9, 10, 11) ; et
dans laquelle chaque module de transmission d'énergie électrique (9, 10, 11) comportant un disjoncteur (17) présente un mécanisme de commande de disjoncteur (18) pour le disjoncteur (17), lequel est disposé au-dessus de la première partie de boîtier (12) du module de transmission d'énergie électrique (9, 10, 11).

2. Éolienne (1) selon la revendication 1, dans laquelle, dans la boîte de raccordement de câble (14) du module de transmission d'énergie électrique (9, 10, 11) dont la terminaison de câble (15) est connectée au générateur (6), est disposée une unité de transformateur de courant (20) configurée pour détecter une intensité d'un courant électrique circulant dans le chemin de courant (22) du module de transmission d'énergie électrique (9, 10, 11) et pour activer le disjoncteur (17) du module de transmission d'énergie électrique (9, 10, 11) afin d'interrompre le chemin de courant (22) lorsque l'intensité de courant dépasse une valeur de seuil pouvant être prédéfinie.

3. Éolienne (1) selon l'une quelconque des revendications 1 ou 2, dans laquelle chaque module de transmission d'énergie électrique (9, 10, 11) présente une seconde partie de boîtier (13) qui est disposée décalée par rapport à la première partie de boîtier (12) et à la boîte de raccordement de câble (14), et dans laquelle s'étend le chemin de courant (22) du module de transmission d'énergie électrique (9, 10, 11) entre la première partie de boîtier (12) et la boîte de raccordement de câble (14).

4. Éolienne (1) selon la revendication 3, dans laquelle la première partie de boîtier (12) et la seconde partie de boîtier (13) de chaque module de transmission d'énergie électrique (9, 10, 11) sont réalisées de manière étanche aux gaz.

5. Éolienne (1) selon la revendication 3 ou 4, dans laquelle le disjoncteur (17) de chaque module de transmission d'énergie électrique (9, 10, 11) comportant un disjoncteur (17) est disposé dans la seconde partie de boîtier (13) du module de transmission d'énergie électrique (9, 10, 11).

6. Éolienne (1) selon l'une quelconque des revendications 1 à 5, dans laquelle chaque module de transmission d'énergie électrique (9, 10, 11) comportant un disjoncteur (17) présente un sectionneur de mise à la terre combiné (16) disposé dans sa première partie de boîtier (12), avec lequel le chemin de courant (22) du module de transmission d'énergie électrique (9, 10, 11) peut être interrompu et une section du chemin de courant (22) connectée au disjoncteur (17) peut être mise à la terre.

7. Éolienne (1) selon l'une quelconque des revendications précédentes, dans laquelle l'un des modules de transmission d'énergie électrique (9, 10, 11) ne présente pas de disjoncteur (17).

8. Éolienne (1) selon l'une quelconque des revendications 1 à 7, dans laquelle le module de transmission d'énergie électrique (9, 10, 11) ne comportant pas de disjoncteur (17) présente un sectionneur de mise à la terre combiné (16) disposé dans sa première partie de boîtier (12), avec lequel le chemin de courant (22) du module de transmission d'énergie électrique (9, 10, 11) peut être interrompu et une section du chemin de courant (22) peut être mise à la terre.

9. Éolienne (1) selon l'une quelconque des revendications 1 à 8, dans laquelle chaque module de transmission d'énergie électrique (9, 10, 11) présente un disjoncteur (17) permettant d'interrompre le chemin de courant (22) du module de transmission d'énergie électrique (9, 10, 11).

10. Éolienne (1) selon l'une quelconque des revendications 1 à 9, comprenant une armoire de commande (21) disposée à côté de la première partie de boîtier (12) d'un module de transmission d'énergie électrique (9, 10, 11).

11. Éolienne (1) selon l'une quelconque des revendications précédentes, dans laquelle tous les éléments de commande (24, 28) et les éléments d'affichage (23, 25, 26, 27) de l'installation de transmission d'énergie électrique (7) sont disposés sur un même côté de l'installation de transmission d'énergie électrique (7).

12. Interconnexion d'une pluralité d'éoliennes (1) réalisées chacune selon l'une quelconque des revendications précédentes par des connexions électriques (29) de terminaisons de câble (15) des modules de transmission d'énergie électrique (9, 10, 11) des éoliennes (1), dans laquelle
- respectivement au moins une terminaison de câble (15) de deux terminaisons de câble (15) connectées entre elles étant la terminaison de câble (15) d'un module de transmission d'énergie électrique (9, 10, 11) comportant un disjoncteur (17),
- chaque éolienne (1) étant interconnectée avec exactement une autre éolienne (1) ou exactement deux autres éoliennes (1),
- au moins une éolienne (1) étant interconnectée avec exactement une autre éolienne (1),
- au moins une éolienne (1) étant interconnectée avec exactement deux autres éoliennes (1), et
- chaque terminaison de câble (15) d'un module de transmission d'énergie électrique (9, 10, 11) de chaque éolienne (1) qui est interconnectée avec deux autres éoliennes (1) étant connectée soit au générateur (6) de l'éolienne (1), soit à une terminaison de câble (15) d'un module de transmission d'énergie électrique (9, 10, 11) de l'une des deux autres éoliennes (1).
